# FASCICULE DE BREVET EUROPEEN

(11) **EP 2 716 549 B1**
(45) Date de publication et mention de la délivrance du brevet: **16.01.2019**
(21) Numéro de dépôt: 13186930.7
(22) Date de dépôt: 01.10.2013
(51) Int. Cl.: B64G 1/22, B64G 1/44, B64G 1/50, B64G 1/10, G01S 19/02

(54) **Satellite à modules de charge utile déployables**
Satellit mit ausfahrbaren Nutzlastlademodulen
Satellite with deployable payload modules

(30) Priorité: 05.10.2012 FR 1202663
(43) Date de publication de la demande: 09.04.2014
(73) Titulaire: Thales, 92400 Courbevoie (FR)
(72) Inventeur: Celerier, Bruno, 06810 Auribeau sur Siagne (FR)
(74) Mandataire: Collet, Alain

(56) Documents cités:
- EP-A1- 0 780 296
- WO-A1-94/29927
- WO-A1-99/19212
- WO-A1-03/059740
- GB-A- 2 319 360

## Description

La présente invention concerne le domaine des satellites de télécommunication et plus particulièrement elle porte sur une architecture de satellite comprenant un ou plusieurs modules de charge utile déployables après une phase de lancement du satellite.

Un satellite de télécommunication est placé en orbite de mission par la combinaison d'un engin spatial lanceur et de ses propres moyens de propulsion. Selon une technique connue, divers instruments de services et de missions sont maintenus contre la structure du satellite dans une première configuration, dite configuration de stockage. Après séparation avec l'engin spatial lanceur, ces instruments sont déployés vers une configuration opérationnelle permettant leur fonctionnement. On connaît ainsi la mise en oeuvre de générateurs solaires maintenus contre des faces nord et sud d'une structure parallélépipédique pendant une phase de lancement, et déployés et orientés vers le soleil après séparation de l'engin lanceur. On connaît également de disposer des réflecteurs d'antennes maintenus contre des faces est et ouest de la structure en configuration de stockage et déployés pour permettre pendant la mission la réflexion d'un faisceau d'ondes entre un bloc source fixé à la structure et une zone de couverture du globe terrestre.

L'augmentation de la capacité de charge utile d'un satellite dans les limites imposées par la coiffe de l'engin spatial lanceur reste un enjeu fort. L'évolution des services de télécommunications (réduction de la taille et de la puissance des terminaux utilisateurs au sol, réutilisation géographique des fréquences liée à la rareté du spectre, recherche de contours formés plus précis) impliquent d'améliorer les performances des antennes. Disposer d'antennes de distance focale élevée, ou de réflecteurs d'antenne de large diamètre constitue un axe de progrès. Pour accroitre la puissance des antennes, il est également attendu d'augmenter la capacité dissipative du satellite pour optimiser l'évacuation de chaleur générée par les instruments de mission. Plus généralement, on cherche à augmenter la surface d'aménagement d'équipements sur la structure du satellite, dans les limites imposées par la coiffe de l'engin lanceur.

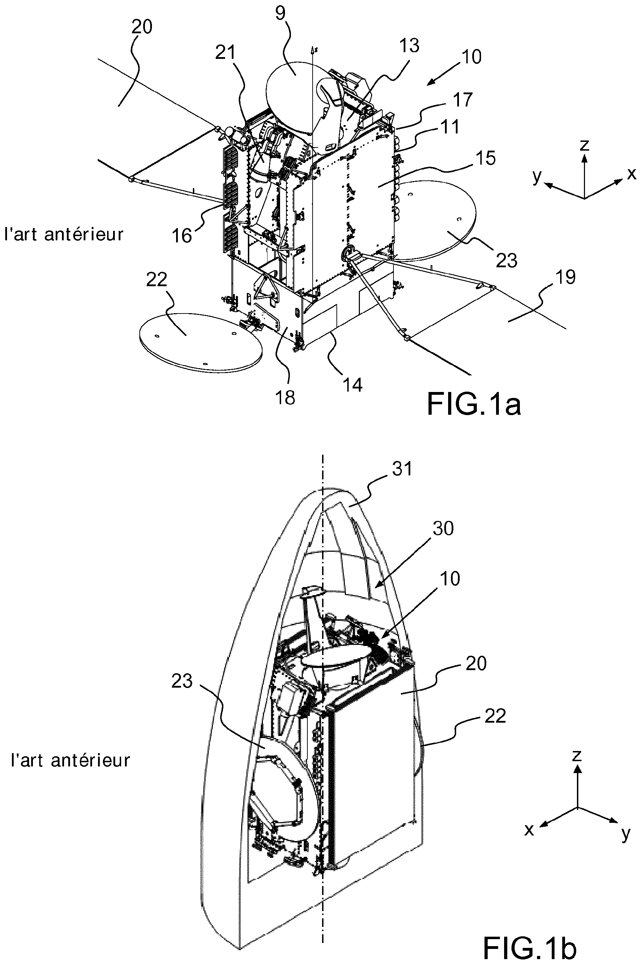

Les figures 1a et 1b représentent un satellite de télécommunication d'architecture courante. Un satellite 10 est représenté sur la figure 1a dans une configuration opérationnelle permettant le fonctionnement des instruments de mission du satellite sur son orbite. Le satellite 10 est représenté sur la figure 1b dans une configuration de stockage. Comme représenté sur la figure 1b, le satellite peut être placé dans le volume intérieur 30 d'une coiffe 31 d'un engin spatial lanceur.

Un satellite de télécommunication d'architecture courante comprend généralement une structure sensiblement parallélépipédique 11 dont l'orientation est maintenue constante par rapport à la terre en configuration opérationnelle. L'homme du métier utilise un trièdre de référence lié au satellite constitué d'un axe Z orienté vers la terre, d'un axe Y perpendiculaire au plan de l'orbite, et d'un axe X formant avec les axes Y et Z un repère orthogonal direct ; l'axe X se trouvant alors selon la direction de la vitesse dans le cas particulier d'orbites circulaires.

Dans une architecture conventionnelle, une face 13 de la structure 11, perpendiculaire à l'axe Z, est communément appelée face terre en raison de son orientation vers la terre, la face opposée 14 étant communément appelée face anti-terre. Une face 15 perpendiculaire à l'axe Y et orientée vers le Nord dans le champ magnétique terrestre est appelée face nord ; la face opposée 16 étant communément appelée face sud. Une face 17 perpendiculaire à l'axe X et orientée dans la direction du déplacement du satellite est appelée face est ; la face opposée 18 étant communément appelée face ouest.

Sur les faces nord et sud sont couramment fixés des générateurs solaires 19 et 20 qui assurent l'alimentation en énergie électrique du satellite. Ces derniers sont motorisés afin que les surfaces qui portent les cellules photovoltaïques pointent toujours en direction du soleil. Les faces nord et sud ont aussi la particularité, quelque soit la position du satellite sur l'orbite, de recevoir le flux solaire avec une incidence faible voire nulle. Elles sont donc utilisées pour rayonner vers l'espace l'énergie dissipée par le fonctionnement des équipements électriques du satellite. Les autres faces reçoivent le flux solaire avec une incidence forte selon la position du satellite sur son orbite. En configuration de stockage, les générateurs solaires sont repliés et maintenus contre les faces nord et sud pour limiter leur encombrement et assurer leur maintien pour résister aux accélérations dynamiques et aux fortes contraintes vibratoires de la phase de lancement.

Sur la face terre sont généralement montés divers instruments de mission, comme par exemple une antenne grégorienne de télécommunication 9 telle que représentée sur la figure 1a. La face anti-terre est généralement utilisée pour fixer le satellite au lanceur. Elle porte aussi en général le moteur d'apogée chargé d'assurer la mise à poste du satellite en complément de l'engin spatial lanceur.

Les faces est et ouest peuvent être utilisées pour aménager des antennes. On connaît en particulier des antennes comprenant une source radiofréquence 21 fixée sur la structure du satellite et un réflecteur déployable 22 tels que représentés sur la figure 1a. En configuration de stockage, le réflecteur d'antenne est maintenu contre une face est ou ouest, il est ensuite déployé par un mouvement de rotation autour d'un axe sensiblement parallèle à l'axe Y. En configuration opérationnelle, le réflecteur 22 est positionné de façon à réfléchir, de manière optimale, un faisceau d'ondes entre la source radiofréquence 21 et une zone de couverture terrestre visée. Les sources radiofréquences, associées à des réflecteurs déployés en faces est ou ouest sont le plus souvent fixées à la structure du satellite sur les faces est ou ouest, ou sur les arrêtes communes aux faces est ou ouest et à la face terre, ou encore sur la face terre dans le cas de l'utilisation de réflecteurs intermédiaires, qui assurent la réflexion du faisceau d'ondes entre la source et le réflecteur déployable.

Les solutions actuelles souffrent de limites que la présente invention cherche à résoudre. Ainsi, un réflecteur d'antenne maintenu contre la structure du satellite est contraint par les dimensions de la structure du satellite devant être stocké dans la coiffe d'un engin lanceur. Typiquement le diamètre des réflecteurs rigides 22 et 23 est généralement limité aux dimensions des faces de la structure parallélépipédique du satellite. Une solution alternative connue consiste à disposer de réflecteurs dépliables constitués de plusieurs parties rigides. Ce type de réflecteur qui génère des interférences du faisceau par la présence sur la surface réfléchissante de reliefs non maitrisés liés au déploiement des différentes parties rigides du réflecteur est en pratique peu utilisé.

Par ailleurs, la capacité dissipative d'un satellite est contrainte par les dimensions des faces nord et sud. Pour améliorer cette capacité dissipative, des solutions alternatives constituées de radiateurs dépliables sont envisagées. La demande de brevet EP 0780296 qui est considéré comme étant l'état de la technique le plus proche, divulgue un satellite de télécommunication comprenant un module supérieur et un module inférieur, il comprend en outre un module latéral, disposé dans une configuration de stockage entre le module supérieur et le module inférieur, et déployé vers une configuration opérationnelle du satellite sur l'orbite, le module latéral comprend deux surfaces principales sensiblement planes et parallèles entre elles, dites surfaces dissipatives, aptes à dissiper par radiation une quantité de chaleur générée par des équipements du satellite; lesdites surfaces dissipatives étant, en configuration opérationnelle, maintenues de manière sensiblement parallèle au plan de l'orbite, permettant de limiter le flux solaire reçu par les surfaces dissipatives. Ces solutions alternatives présentent là encore des difficultés : complexité et coût du système thermique, augmentation de la masse, perte de fiabilité, limitation des zones de déploiement n'interférant pas avec les réflecteurs.

Une nouvelle architecture de satellite mettant en oeuvre des larges modules de charge utile déployables, est proposée par la présente invention. Les bénéfices attendus d'une telle architecture sont avant tout une capacité d'emport de réflecteurs rigides de très larges diamètres et une forte augmentation de la capacité dissipative du satellite ainsi configuré. D'autres bénéfices apparaitront aussi à la lecture de la description de l'invention.

L'invention vise à proposer une solution alternative permettant notamment l'emport de réflecteurs rigides de larges diamètres et l'augmentation de la capacité dissipative du satellite en palliant les difficultés de mise en oeuvre citées ci-dessus.

A cet effet, l'invention a pour objet un satellite de télécommunication à orbite géostationnaire comprenant un module supérieur, un module inférieur, et un ou plusieurs modules latéraux, disposés dans une configuration de stockage entre le module supérieur et le module inférieur, et déployés vers une configuration opérationnelle du satellite sur l'orbite par une rotation selon un axe Z orienté vers la terre en configuration opérationnelle. Chacun des modules latéraux comprend deux surfaces principales sensiblement planes et parallèles entre elles, dites surfaces dissipatives, aptes à dissiper par radiation une quantité de chaleur générée par des équipements du satellite; lesdites surfaces dissipatives étant, en configuration opérationnelle, maintenues de manière sensiblement parallèle au plan de l'orbite, permettant de limiter le flux solaire reçu par les surfaces dissipatives et optimiser la quantité de chaleur dissipée par le module latéral.

Avantageusement, au moins un module latéral comprend deux articulations, reliées respectivement au module supérieur et au module inférieur, configurées de manière à permettre la rotation dudit module latéral selon l'axe Z, de la configuration de stockage vers la configuration opérationnelle.

Avantageusement, le satellite comprend en outre une structure rigide reliant d'une part le module supérieur et d'autre part le module inférieur.Avantageusement, au moins un module latéral comprend au moins une articulation reliée à la structure rigide, configurée de manière à permettre la rotation dudit module latéral selon l'axe Z, de la configuration de stockage vers la configuration opérationnelle.

Dans un mode de réalisation privilégié de la présente invention, au moins un module latéral comprend en outre au moins un dispositif de télécommunication comprenant un réflecteur d'antenne, un mécanisme motorisé reliant le réflecteur d'antenne au module latéral, et une source radiofréquence fixée au module latéral et apte à émettre ou recevoir un faisceau d'ondes. Ledit mécanisme motorisé est configuré pour maintenir, en configuration de stockage, le réflecteur entre le module supérieur et le module inférieur, et de manière sensiblement parallèle à une des surfaces dissipatives du module latéral et pour déplacer et maintenir ledit réflecteur, en configuration opérationnelle, dans une position permettant la réflexion d'un faisceau d'ondes entre la source radiofréquence et une zone de couverture prédéfinie du globe terrestre.

Avantageusement, la source radiofréquence d'un des dispositifs de télécommunication est fixée contre une surface dissipative du module latéral.

Avantageusement, la source radiofréquence d'un des dispositifs de télécommunication est fixée contre une surface du module latéral, adjacente et sensiblement perpendiculaire aux deux surfaces dissipatives.

Avantageusement, au moins un module latéral comprend plusieurs dispositifs de télécommuncation ; ledit satellite comprenant en outre des moyens de communication entre les dispositifs de télécommunication, le module supérieur et/ou le module inférieur ; lesdits moyens de communication comprenant une liaison physique ou une liaison en espace libre.

Le satellite peut également comprendre un renfort mécanique sensiblement longiligne, reliant le module supérieur et le module inférieur, apte à rigidifier le satellite.

Le satellite peut comprendre en outre un ensemble de générateurs solaires maintenu en configuration de stockage contre une des surfaces dissipatives d'un module latéral.

Avantageusement, l'ensemble de générateurs solaires est fixé à un module latéral, au module supérieur ou au module inférieur. Préférentiellement, l'ensemble de générateurs solaires est relié électriquement au module inférieur.

Dans un mode de réalisation particulièrement avantageux, le satellite comprend deux modules latéraux configurés de façon à ce que, en configuration de stockage, les surfaces dissipatives des deux modules latéraux soient sensiblement parallèles entre elles.

Avantageusement, au moins un module latéral est déployé de la configuration de stockage à la configuration opérationnelle par une rotation d'un angle sensiblement égal à 90 degrés.

Avantageusement, au moins un module latéral est déployé de la configuration de stockage à la configuration opérationnelle par une rotation d'un angle sensiblement égal à 180 degrés.

L'invention sera mieux comprise et d'autres avantages apparaîtront à la lecture de la description détaillée des modes de réalisation donnés à titre d'exemple sur les figures suivantes.
Les figures 1a et 1b, déjà présentées, représentent un satellite de télécommunication d'architecture courante, en configuration opérationnelle et en configuration de stockage,
la figure 2, représente un mode de réalisation d'un satellite de télécommunication selon l'invention, en configuration opérationnelle,
les figures 3a et 3b, représentent selon deux vues de coté, un satellite de télécommunication selon ce mode de réalisation, en configuration de stockage,
les figures 4a, 4b et 4c, représentent selon trois vues, un satellite de télécommunication selon ce mode de réalisation.

Par souci de clarté, les mêmes éléments porteront les mêmes repères dans les différentes figures. Dans la suite, il est fait référence au trièdre de référence composé des axes X, Y et Z précédemment décrits. L'orientation du satellite peut être identifée sur chacune des figures au moyen du trièdre représenté sur la figure.

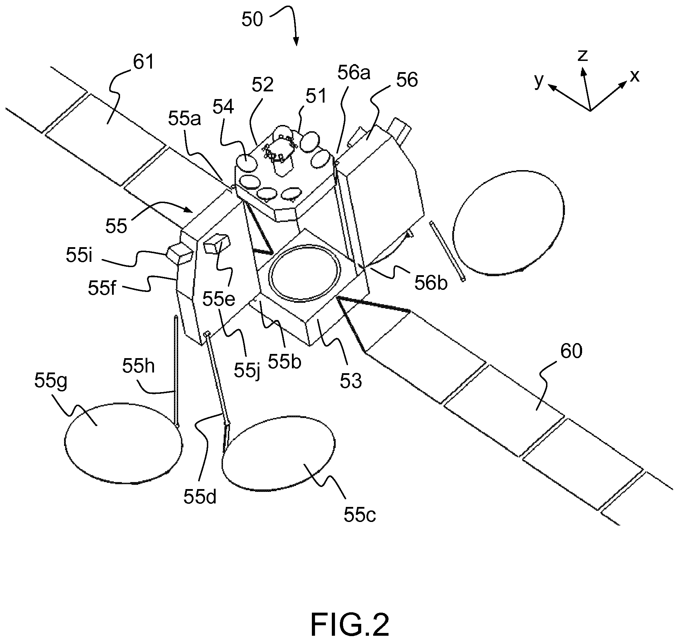

La figure 2 représente un mode de réalisation d'un satellite de télécommunication selon l'invention. Dans ce mode de réalisation, un satellite de télécommunication à orbite géostationnaire 50 comprend une structure rigide 51, un module supérieur 52 et un module inférieur 53. Les modules supérieur 52 et inférieur 53 sont solidaires de la structure rigide 51. En configuration opérationnelle, le satellite étant sur son orbite de mission, la structure rigide est orientée de manière constante selon un axe Z dirigé vers la terre. Le module supérieur 52 et le module inférieur 53 forment deux extrémités de la structure selon l'axe Z. Le module supérieur 52 est disposé au plus proche de la terre en configuration opérationnelle. le module inférieur 53 est disposé au plus loin de la terre en configuration opérationnelle. Autrement dit, le module supérieur 52 est orienté en direction de la terre; le module inférieur 53 est orienté dans une direction opposée à la terre. Dans une mise en oeuvre préférée de la présente invention, le module supérieur 52 comprend un ensemble d'instruments de mission, on pense notamment à des instruments de télécommunications 54 tels que représentés sur la figure 2. Le module inférieur 53 comprend préférentiellement des instruments de service. On pense en particulier à des systèmes de propulsion, pour le transfert d'orbite et/ou le maintien à poste, et à des dispositifs de stockage (batterie, réservoir d'ergol, réservoir Xénon).

Le satellite 50 comprend également deux modules latéraux 55 et 56. Dans ce mode de réalisation, chaque module est relié d'une part au module supérieur 52 et d'autre part au module inférieur 53, par l'intermédiaire de deux articulations. On note 55a et 55b les articulations du module latéral 55 avec respectivement les modules supérieur 52 et inférieur 53 ; et 56a et 56b les articulations du module latéral 56 avec respectivement les modules supérieur 52 et inférieur 53. Pour chaque module, les articulations sont configurées de manière à permettre la rotation du module latéral selon l'axe Z. Dans un mode de réalisation alternatif, la rotation d'un module latéral selon l'axe Z pourra être aménagée non pas avec les modules supérieur 52 et inférieur 53 mais directement avec la structure rigide 51. Dans ce cas, le module latéral comprend au moins une articulation reliée à la structure rigide 51 configurée de manière à permettre la rotation dudit module latéral selon l'axe Z.

En configuration de stockage les modules latéraux sont repliés et maintenus contre la structure 51 du satellite. A l'issue d'une phase de lancement du satellite vers son orbite de mission, les modules latéraux sont déployés vers la configuration opérationnelle par une rotation d'axe Z.

Chaque module latéral comprend deux surfaces principales sensiblement planes et parallèles entre elles, dites surfaces dissipatives. Ces surfaces ont pour but de dissiper par radiation une quantité de chaleur générée par des équipements du satellite. On pense notamment à la chaleur générée par les systèmes de télécommunications pour l'émission de signaux radiofréquence de forte puissance. Pour optimiser la dissipation de chaleur, les surfaces sont préférentiellement recouvertes au moins partiellement par un revêtement à forte émissivité et faible absorptivité, comme par exemple des miroirs de quartz ou de la peinture blanche. On pense aussi à des matériaux de type OSR pour l'acronyme anglo-saxon Optical Surface Radiator.

Dans le but de limiter le flux solaire reçu par les surfaces dissipatives et ainsi optimiser la quantité de chaleur dissipée par le module latéral, les modules latéraux sont positionnés en configuration opérationnelle de manière à ce que leurs surfaces dissipatives soient maintenues de manière sensiblement parallèles à l'orbite géostationnaire, ou autrement dit parallèles au plan (X, Z). Ainsi positionnées, les surfaces dissipatives recoivent le flux solaire avec une incidence faible voire nulle.

Dans le mode de réalisation que nous avons décrit, le satellite comprend une structure rigide 51 sur laquelle sont fixés le module supérieur 52 et le module inférieur 53. Ce mode de réalisation n'est pas limitatif de la présente invention, il est aussi envisagé de ne pas disposer d'une telle structure rigide, le module supérieur 52 et le module inférieur 53 étant alors reliés par les modules latéraux déployables. Ainsi, la présente invention porte plus généralement sur un satellite de télécommunication à orbite géostationnaire comprenant un module supérieur 52 et un module inférieur 53. Le satellite comprend un ou plusieurs modules latéraux, disposés dans une configuration de stockage entre le module supérieur 52 et le module inférieur 53, et déployés vers une configuration opérationnelle du satellite sur l'orbite par une rotation selon un axe Z orienté vers la terre en configuration opérationnelle.

La mise en oeuvre des modules latéraux déployables selon l'invention est particulièrement avantageuse car elle permet d'augmenter la capacité dissipative d'un facteur proche de 2 par rapport à une architecture conventionnelle déjà présentée. En effet, en disposant de modules latéraux de grandes dimensions selon l'axe Z et des modules supérieur 52 et inférieur 53 de faibles dimensions selon cet axe, chaque surface dissipative présente une capacité proche de celle des faces nord ou sud d'un satellite d'architecture courante. Le satellite 50 qui comprend deux modules latéraux, comprend quatre surfaces dissipatives, et donc une capacité dissipative proche du double de celle d'un satellite d'architecture conventionnelle.

Le module latéral 55 comprend en outre un dispositif de télécommunication comprenant un réflecteur d'antenne 55c, un mécanisme motorisé 55d reliant le réflecteur d'antenne 55c au module latéral 55, et une source radiofréquence 55e fixée au module latéral 55 et apte à émettre ou recevoir un faisceau d'ondes.

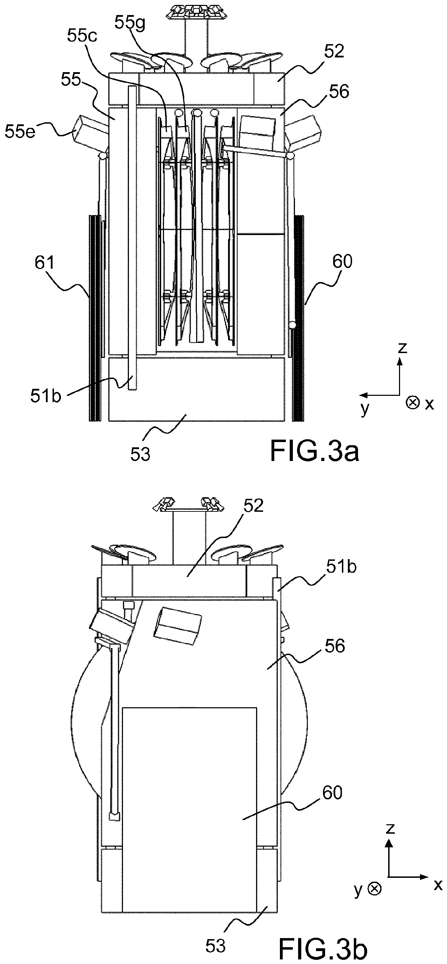

Le mécanisme motorisé 55d est configuré pour maintenir, en configuration de stockage, le réflecteur 55c contre une surface dissipative du module latéral 55 dite surface dissipative interne 55f, orientée en configuration de stockage vers la structure 51 du satellite 50. Cette configuration de stockage est décrite plus en détail sur les figures 3a et 3b.

Le mécanisme motorisé 55d est aussi configuré pour déplacer et maintenir le réflecteur 55c, en configuration opérationnelle, dans une position permettant la réflexion d'un faisceau d'ondes entre la source radiofréquence 55e et une zone de couverture prédéfinie du globe terrestre.

Le module latéral 55 comprend également un second dispositif de télécommunication comprenant un réflecteur d'antenne 55g, un mécanisme motorisé 55h et une source radiofréquence 55i. Le mécanisme motorisé 55d du premier dispositif de télécommunication relie le réflecteur 55c au module latéral 55 par l'intermédiaire d'une surface dissipative, dite surface dissipative externe 55j, orientée dans une direction opposée à la structure 51 du satellite. Le mécanisme motorisé 55h du second dispositif de télécommunication relie le réflecteur 55g au module latéral 55 par l'intermédiaire de la surface dissipative interne 55f.

Dans un mode de réalisation préféré, la source radiofréquence 55e du premier dispositif de télécommunication est fixée contre la surface dissipative externe 55j du module latéral 55. La source radiofréquence 55i du second dispositif de télécommunication est fixée contre une surface du module latéral 55, adjacente et sensiblement perpendiculaire aux deux surfaces dissipatives 55f et 55j.

Une difficulté de la présente invention réside dans la connexion des dispositifs de télécommunication fixés sur les modules latéraux avec la structure du satellite. L'articulation entre les modules latéraux et la structure rend difficile et coûteux la connexion par liaision de type guide d'onde. Les modules latéraux comprennent avantageusement des moyens de communication par une liaison physique ou une liaison en espace libre. On pense à des liaisons radio-féquence en espace libre à faible puissance, des liaisons optiques ou des liaisons numériques. Ces moyens de communication peuvent être mis en oeuvre entre les dispositifs de télécommunication d'un ou plusieurs modules latéraux, le module supérieur 52 et/ou le module inférieur 53.

Les figures 3a et 3b, représentent selon deux vues de coté, un satellite de télécommunication selon le mode de réalisation décrit sur la figure 2, en configuration de stockage. Comme précédemment décrit, le satellite 50 comprend un module supérieur 52, un module inférieur 53 et deux modules latéraux 55 et 56. Dans un mode de réalisation préféré représenté sur les figures 2, 3a et 3b, chaque module latéral 55 et 56 est déployé de la configuration de stockage à la configuration opérationnelle par une rotation d'un angle sensiblement égal à 180 degrés. En maintenant les modules latéraux entre les modules supérieur et inférieur et dans leur prolongement, le satellite présente en configuration de stockage une forme sensiblement parallélépipédique. Les modules latéraux 55 et 56 occupent l'emplacement des faces Sud et Nord d'une architecture conventionnelle. Dans un mode de réalisation alternatif de l'invention, les modules latéraux sont déployés de la configuration de stockage à la configuration opérationnelle par une rotation d'un angle sensiblement égal à 90 degrés ; les modules latéraux occupant dans ce cas l'emplacement des faces est et ouest d'une architecture conventionnelle. Notons aussi que le satellite selon l'invention comprend un ou plusieurs modules latéraux. Dans le mode de réalisation représenté sur les figures, le satellite comprend deux modules latéraux configurés de façon à ce que, en configuration de stockage, les surfaces dissipatives des deux modules latéraux soient sensiblement parallèles entre elles.

Dans ce mode de réalisation, chaque module latéral comprend deux dispositifs de télécommunication. En configuration de stockage, le réflecteur 55c est maintenu contre la surface dissipative interne 55f dudit module latéral. Le second réflecteur 55g est maintenu contre le premier réflecteur 55c.

Le nombre de module latéraux, ainsi que le nombre de dispositifs de télécommunication de chacun des modules latéraux, tels que représentés sur les figures, ne constituent pas des limites à la présente invention. De même, le stockage d'un premier réflecteur contre la surface dissipative interne, et d'un second réflecteur contre le premier réflecteur est un mode de réalisation non limitatif de l'invention. L'invention porte plus généralement sur un satellite dont un module latéral comprend au moins un dispositif de télécommunication comprenant un réflecteur d'antenne, un mécanisme motorisé reliant le réflecteur d'antenne au module latéral, et une source radiofréquence fixée au module latéral ; le mécanisme motorisé étant configuré pour maintenir, en configuration de stockage, le réflecteur entre le module supérieur 52 et le module inférieur 53 et de manière sensiblement parallèle à une des surfaces dissipatives du module, et pour déplacer et maintenir ledit réflecteur, en configuration opérationnelle, dans une position permettant la réflexion d'un faisceau d'ondes entre la source radiofréquence et une zone de couverture prédéfinie du globe terrestre.

Cette configuration est particulièrement avantageuse car elle permet d'embarquer des réflecteurs rigides au centre de la structure du satellite. Il devient possible d'embarquer des réflecteurs rigides, d'un seul tenant et de très grands diamètres. Comme nous l'avons décrit sur la figure 1b, le diamètre de réflecteurs stockés contre les faces de la structure parallélépipédique 11 est limité aux dimensions de ses faces. Les coiffes d'engin spatial lanceur étant usuellement à symétrie de révolution, le fait de positionner le réflecteur au centre de la structure, entre les modules supérieur et inférieur, permet de s'affranchir de la limite des dimensions de la structure du satellite. L'emport de réflecteurs de diamètres proches du diamètre de la coiffe devient possible. Typiquement, l'architecture de satellite décrit par la présente invention permet avantageusement le stockage de réflecteurs rigides de diamètres pouvant aller jusqu'à 5 mètres.

Dans le but de renforcer la rigidité mécanique de la structure quelquesoit la position angulaire des modules latéraux, le satellite peut comprendre un renfort mécanique 51b sensiblement longiligne reliant le module supérieur 52 et le module inférieur 53. Avantageusement, un renfort mécanique 51b est positionné le long des articulations de chaque module latéral, et est relié aux modules supérieur 52 et inférieur 53, à proximité des articulations. Dans une mise en oeuvre alternative, un ou plusieurs renforts mécaniques sont positionnés entre les réflecteurs des deux modules 55 et 56, proches du centre de la structure. Plusieurs matériaux peuvent être envisagés pour ces renforts mécaniques, on pense en particulier à des tubes de carbone qui présentent l'avantage d'une résistance mécanique élevée pour une masse compétitive.

Le satellite comprend également deux ensembles de générateurs solaires 60 et 61. Un ensemble de générateurs solaires peut être constitué de plusieurs panneaux repliés les uns contre les autres en configuration de stockage et déployés après séparation du lanceur. Dans le mode de réalisation de l'invention représenté sur les figures, les ensembles de générateurs solaires 60 et 61 sont fixés sur le module inférieur 53 du satellite. Ils peuvent également être fixés sur le module supérieur 52 ou sur un module latéral du satellite, et relié électriquement au module inférieur 53 qui comprend généralement les batteries.

Avantageusement, le satellite comprend au moins un ensemble de générateurs solaires maintenu en configuration de stockage contre la surface dissipative externe d'un module latéral. Sur les figures 3a et 3b, l'ensemble de générateurs solaires 60 est maintenu en configuration de stockage contre la surface dissipative externe du module latéral 56. L'ensemble de générateurs solaires 61 est maintenu en configuration de stockage contre la surface dissipative externe 55f du module latéral 55.

Lorsque le satellite est libéré de l'engin spatial lanceur, les générateurs solaires sont déployés, au moins partiellement, de manière à permettre la production d'énergie électrique et permettre la rotation des modules latéraux. Les modules latéraux sont alors déployés, au moins partiellement, par rotation selon l'axe Z. Enfin, les mécanismes motorisés des différents dispositifs de télécommunication assurent le déploiement successif des réflecteurs vers la configuration opérationnelle.

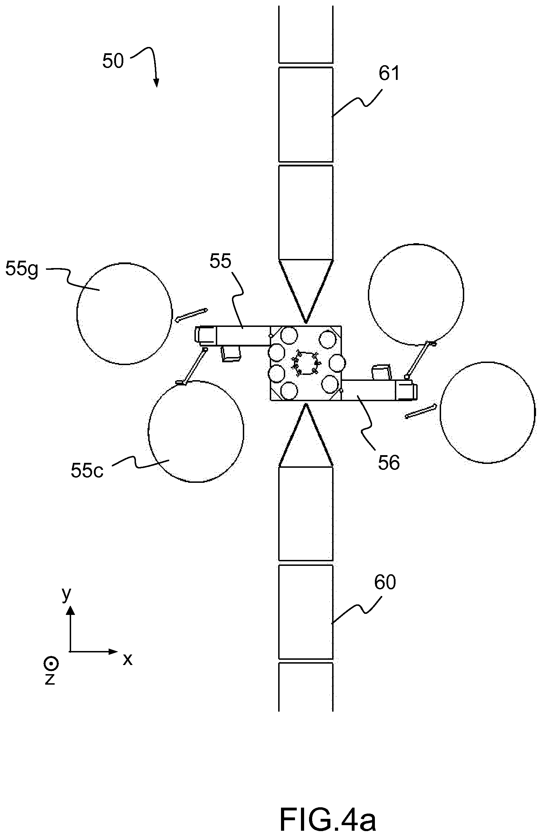

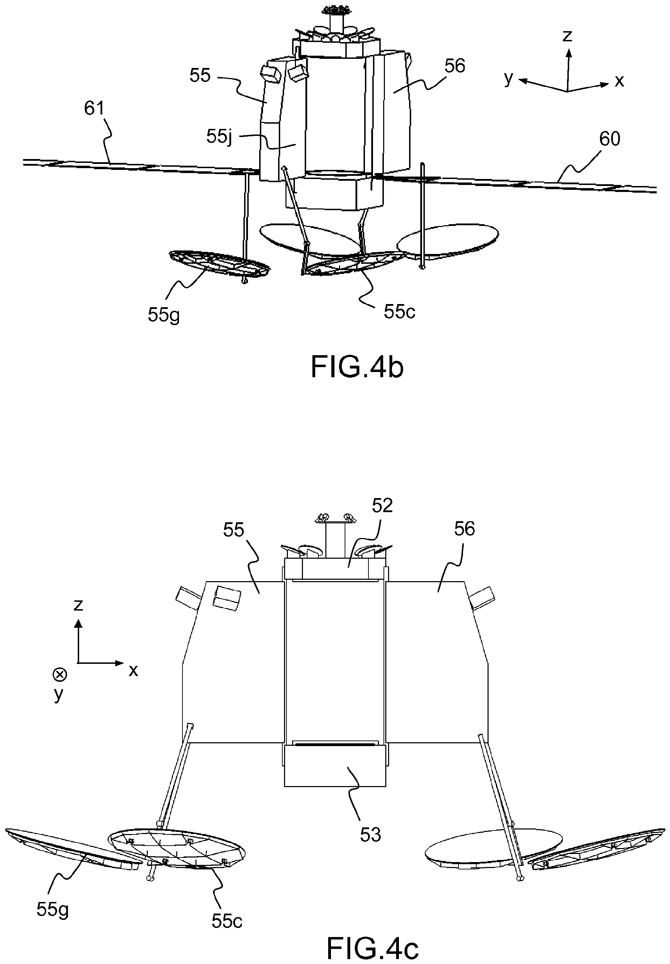

Les figures 4a, 4b et 4c, représentent selon trois vues, un satellite de télécommunication selon le mode de réalisation précédemment décrit . Les différents composants du satellite 50 identifiables sur ces vues sont tels que décrits précédemment, et ne sont donc pas repris en détail ici.

Ces différentes vues illustrent les bénéfices de l'architecture du satellite par rapport aux solutions connues de l'état de la technique. En premier lieu, l'architecture proposée permet d'embarquer des réflecteurs rigides de très larges diamètres. En stockant ces réflecteurs au centre de la structure, le diamètre maximal qui peut être embarqué n'est plus contraint par les dimensions de la structure mais par le diamètre de la coiffe de l'engin spatial lanceur. A titre d'exemple, pour un lanceur commercial de type Ariane, cela signifie un diamètre de réflecteur pouvant atteindre 5 mètres. Notons également que la distance focale des antennes ainsi configurées est sensiblement plus élevée que celle accessible par une architecture conventionnelle, limitée par les dimensions de la structure du satellite. En fonction de la définition du mécanisme motorisé et de l'emplacement de la source radiofréquence, des distances focales comprises entre 3 et 7 mètres sont envisagées, voire davantage si besoin au moyen de bras de déport articulés. Il a aussi été mentionné l'augmentation de la capacité dissipative par un facteur proche de 2 par rapport à une architecture conventionnelle. Plus généralement les modules latéraux déployables permettent d'augmenter la surface d'aménagement du satellite. Divers équipements de mission ou de service peuvent être fixés à ces modules latéraux déployables, offrant une flexiblité nouvelle de conception. Par équipement de mission ou de service, on entend à titre d'exemple non limitatif, un dispositif de télécommunication, un ensemble de générateurs solaires, ou tout autre dispositif en communication avec le module supérieur ou le module inférieur du satellite.

## Revendications

1. Satellite de télécommunication à orbite géostationnaire comprenant un module supérieur (52) et un module inférieur (53), le satellite comprenant un module latéral (55), disposé dans une configuration de stockage entre le module supérieur (52) et le module inférieur (53), et déployé vers une configuration opérationnelle du satellite sur l'orbite par une rotation selon un axe Z orienté vers la terre en configuration opérationnelle,
et un ensemble d'au moins un équipement de mission ou de service fixé au module latéral, ledit ensemble d'au moins un module de mission ou de service comprenant un dispositif de télécommunication et/ou un ensemble de générateurs solaires et/ou un dispositif en communication avec le module supérieur ou le module inférieur du satellite,
le module latéral comprenant deux surfaces principales (55f, 55j) sensiblement planes et parallèles entre elles, dites surfaces dissipatives, aptes à dissiper par radiation une quantité de chaleur générée par des équipements du satellite; lesdites surfaces dissipatives (55f, 55j) étant, en configuration opérationnelle, maintenues de manière sensiblement parallèle au plan de l'orbite, permettant de limiter le flux solaire reçu par les surfaces dissipatives (55f, 55j) et optimiser la quantité de chaleur dissipée par le module latéral (55).

2. Satellite selon la revendication 1, dont le module latéral (55) comprend deux articulations (55a, 55b), reliées respectivement au module supérieur (52) et au module inférieur (53), configurées de manière à permettre la rotation dudit module latéral (55) selon l'axe Z, de la configuration de stockage vers la configuration opérationnelle.

3. Satellite selon l'une des revendications précédentes, comprenant une structure rigide (51) reliant d'une part le module supérieur (52) et d'autre part le module inférieur (53).

4. Satellite selon la revendication 3, dont le module latéral comprend au moins une articulation reliée à la structure rigide (51), configurée de manière à permettre la rotation dudit module latéral selon l'axe Z, de la configuration de stockage vers la configuration opérationnelle.

5. Satellite selon l'une des revendications précédentes, dont l'ensemble d'au moins un équipement de mission ou de service comprend un dispositif de télécommunication comprenant un réflecteur d'antenne (55c), un mécanisme motorisé (55d) reliant le réflecteur d'antenne (55c) au module latéral (55), et une source radiofréquence (55e) fixée au module latéral (55) et apte à émettre ou recevoir un faisceau d'ondes ;
ledit mécanisme motorisé (55d) étant configuré pour maintenir, en configuration de stockage, le réflecteur (55c) entre le module supérieur (52) et le module inférieur (53), et de manière sensiblement parallèle à une des surfaces dissipatives du module latéral (55) et pour déplacer et maintenir ledit réflecteur (55d), en configuration opérationnelle, dans une position permettant la réflexion d'un faisceau d'ondes entre la source radiofréquence (55e) et une zone de couverture prédéfinie du globe terrestre.

6. Satellite selon la revendication 5, dont la source radiofréquence (55e) d'un dispositif de télécommunication est fixée contre une surface dissipative (55j) du module latéral.

7. Satellite selon l'une des revendications 5 ou 6, dont la source radiofréquence (55i) d'un dispositif de télécommunication est fixée contre une surface du module latéral, adjacente et sensiblement perpendiculaire aux deux surfaces dissipatives (55f, 55j).

8. Satellite selon l'une des revendications 5 à 7, dont l'ensemble d'au moins un équipement de mission ou de service comprend plusieurs dispositifs de télécommuncation ; ledit satellite comprenant en outre des moyens de communication entre les dispositifs de télécommunication, le module supérieur (52) et/ou le module inférieur (53); lesdits moyens de communication comprenant une liaison physique ou une liaison en espace libre.

9. Satellite selon l'une des revendications précédentes, comprenant un renfort mécanique (51b) sensiblement longiligne, reliant le module supérieur (52) et le module inférieur (53), apte à rigidifier le satellite.

10. Satellite selon l'une des revendications précédentes, comprenant un ensemble de générateurs solaires (61) maintenu en configuration de stockage contre une des surfaces dissipatives du module latéral (55).

11. Satellite selon la revendication 10, dont l'ensemble de générateurs solaires est fixé au module latéral, au module supérieur (52) ou au module inférieur (53).

12. Satellite selon la revendication 10, dont l'ensemble de générateurs solaires (61) est relié électriquement au module inférieur (53).

13. Satellite selon l'une des revendications précédentes, comprenant deux modules latéraux (55, 56) configurés de façon à ce que, en configuration de stockage, les surfaces dissipatives des deux modules latéraux soient sensiblement parallèles entre elles.

14. Satellite selon l'une des revendications précédentes, dont au moins un module latéral est déployé de la configuration de stockage à la configuration opérationnelle par une rotation d'un angle sensiblement égal à 90 degrés.

15. Satellite selon l'une des revendications précédentes, dont au moins un module latéral (55) est déployé de la configuration de stockage à la configuration opérationnelle par une rotation d'un angle sensiblement égal à 180 degrés.

## Patentansprüche

1. Telekommunikationssatellit mit geostationärer Umlaufbahn, beinhaltend ein oberes Modul (52) und ein unteres Modul (53), wobei der Satellit ein seitliches Modul (55) beinhaltet, welches in einer Lagerungskonfiguration zwischen dem oberen Modul (52) und dem unteren Modul (53) angeordnet ist, und in eine Betriebskonfiguration des Satelliten in der Umlaufbahn durch eine Drehung entlang einer auf die Erde ausgerichteten Z-Achse in Betriebskonfiguration ausgefahren wird,
und eine Gruppe von mindestens einer Missions- oder Dienstausrüstung, welche am seitlichen Modul befestigt ist, wobei die Gruppe von mindestens einem Missions- oder Dienstmodul eine Telekommunikationsvorrichtung und/oder eine Gruppe von Solargeneratoren und/oder eine Vorrichtung in Kommunikation mit dem oberen Modul oder dem unteren Modul des Satelliten beinhaltet,
wobei das seitliche Modul zwei Hauptseiten (55f, 55j) beinhaltet, welche im Wesentlichen eben und parallel zueinander sind, genannt Dissipationsflächen, welche in der Lage sind, durch Strahlung eine Menge von durch die Ausrüstungen des Satelliten erzeugter Wärme zu dissipieren; wobei die Dissipationsflächen (55f, 55j) in Betriebskonfiguration im Wesentlichen parallel zur Ebene der Umlaufbahn gehalten werden, wodurch es ermöglicht wird, den durch die Dissipationsflächen (55f, 55j) empfangenen Solarfluss zu begrenzen und die Menge der durch das seitliche Modul (55) dissipierten Wärme zu optimieren.

2. Satellit nach Anspruch 1, dessen seitliches Modul (55) zwei Gelenke (55a, 55b) beinhaltet, welche jeweils mit dem oberen Modul (52) und dem unteren Modul (53) verbunden und so konfiguriert sind, dass sie die Drehung des seitlichen Moduls (55) entlang der Z-Achse, von der Lagerungskonfiguration zur Betriebskonfiguration, ermöglichen.

3. Satellit nach einem der vorhergehenden Ansprüche, beinhaltend eine starre Struktur (51), welche einerseits das obere Modul (52) und andererseits das untere Modul (53) verbindet.

4. Satellit nach Anspruch 3, dessen seitliches Modul mindestens ein Gelenk beinhaltet, welches mit der starren Struktur (51) verbunden und so konfiguriert ist, dass es die Drehung des seitlichen Moduls entlang der Z-Achse, von der Lagerungskonfiguration zur Betriebskonfiguration, ermöglicht.

5. Satellit nach einem der vorhergehenden Ansprüche, dessen Gruppe von mindestens einer Missions- oder Dienstausrüstung eine Telekommunikationsvorrichtung beinhaltet, welche einen Antennenreflektor (55c), einen angetriebenen Mechanismus (55d), welcher den Antennenreflektor (55c) mit dem seitlichen Modul (55) verbindet, und eine Funkfrequenzquelle (55e) beinhaltet, welche am seitlichen Modul (55) befestigt und in der Lage ist, einen Wellenstrahl zu senden oder zu empfangen;
wobei der angetriebene Mechanismus (55d) konfiguriert ist, um in der Lagerungskonfiguration den Reflektor (55c) zwischen dem oberen Modul (52) und dem unteren Modul (53) und im Wesentlichen parallel zu einer der Dissipationsflächen des seitlichen Moduls (55) zu halten und um den Reflektor (55d) in der Betriebskonfiguration zu bewegen und in einer Position zu halten, welche die Reflexion eines Wellenstrahls zwischen der Funkfrequenzquelle (55e) und einer vorbestimmten Abdeckungszone des Erdballs zu ermöglicht.

6. Satellit nach Anspruch 5, dessen Funkfrequenzquelle (55e) einer Telekommunikationsvorrichtung an einer Dissipationsfläche (55j) des seitlichen Moduls befestigt ist.

7. Satellit nach einem der Ansprüche 5 oder 6, dessen Funkfrequenzquelle (55i) einer Telekommunikationsvorrichtung an einer Fläche des seitlichen Moduls befestigt ist, welche an die beiden Dissipationsflächen (55f, 55j) angrenzt und im Wesentlichen rechtwinklig zu diesen ist.

8. Satellit nach einem der Ansprüche 5 bis 7, dessen Gruppe von mindestens einer Missions- oder Dienstausrüstung mehrere Telekommunikationsvorrichtungen beinhaltet; wobei der Satellit zudem Kommunikationsmittel zwischen den Telekommunikationsvorrichtungen, dem oberen Modul (52) und/oder dem unteren Modul (53) beinhaltet; wobei die Kommunikationsmittel eine physikalische Verbindung oder eine Verbindung im freien Raum beinhalten.

9. Satellit nach einem der vorhergehenden Ansprüche, beinhaltend eine mechanische Verstärkung (51b), welche im Wesentlichen länglich ist, welche das obere Modul (52) und das untere Modul (53) verbindet und in der Lage ist, den Satelliten zu versteifen.

10. Satellit nach einem der vorhergehenden Ansprüche, beinhaltend eine Gruppe von Solargeneratoren (61), welche in der Lagerungskonfiguration an einer der Dissipationsflächen des seitlichen Moduls (55) gehalten wird.

11. Satellit nach Anspruch 10, dessen Gruppe von Solargeneratoren am seitlichen Modul, am oberen Modul (52) oder am unteren Modul (53) befestigt ist.

12. Satellit nach Anspruch 10, dessen Gruppe von Solargeneratoren (61) elektrisch mit dem unteren Modul (53) verbunden ist.

13. Satellit nach einem der vorhergehenden Ansprüche, beinhaltend zwei seitliche Module (55, 56), welche so konfiguriert sind, dass in der Lagerungskonfiguration die Dissipationsflächen der beiden seitlichen Module im Wesentlichen parallel zueinander sind.

14. Satellit nach einem der vorhergehenden Ansprüche, dessen mindestens ein seitliches Modul aus der Lagerungskonfiguration in die Betriebskonfiguration ausgefahren wird durch eine Drehung um einen Winkel, welcher im Wesentlichen 90 Grad entspricht.

15. Satellit nach einem der vorhergehenden Ansprüche, dessen mindestens ein seitliches Modul (55) aus der Lagerungskonfiguration in die Betriebskonfiguration ausgefahren wird durch eine Drehung um einen Winkel, welcher im Wesentlichen 180 Grad entspricht.

## Claims

1. Telecommunication satellite with geostationary orbit comprising an upper module (52) and a lower module (53),
wherein the satellite comprises a lateral module (55), disposed in a storage configuration between the upper module (52) and the lower module (53), and deployed to an operational configuration of the satellite in the orbit by a rotation in relation to an axis Z oriented towards the earth in the operational configuration,
and a set of at least one mission or service facility fixed to the lateral module, said set of at least one mission or service facility comprising a telecommunication device and/or a set of solar generators and/or a device in communication with the upper module or the lower module of the satellite,
the lateral module comprising two substantially plane and mutually parallel main surfaces (55f, 55j), termed dissipative surfaces, able to dissipate by radiation a quantity of heat generated by facilities of the satellite; said dissipative surfaces (55f, 55j) being, in the operational configuration, held in a manner substantially parallel to the plane of the orbit, making it possible to limit the solar flux received by the dissipative surfaces (55f, 55j) and to optimize the quantity of heat dissipated by the lateral module (55).

2. Satellite according to Claim 1, whose lateral module (55) comprises two articulations (55a, 55b), linked respectively to the upper module (52) and to the lower module (53), configured so as to allow the rotation of said lateral module (55) in relation to the Z axis, from the storage configuration to the operational configuration.

3. Satellite according to one of the preceding claims, comprising a rigid structure (51) linking on the one hand the upper module (52) and on the other hand the lower module (53).

4. Satellite according to Claim 3, whose lateral module comprises at least one articulation linked to the rigid structure (51), configured so as to allow the rotation of said lateral module in relation to the Z axis, from the storage configuration to the operational configuration.

5. Satellite according to one of the preceding claims, of which the set of at least one mission or service facility comprises a telecommunication device comprising an antenna reflector (55c), a motorized mechanism (55d) linking the antenna reflector (55c) to the lateral module (55), and a radiofrequency source (55e) fixed to the lateral module (55) and able to emit or receive a beam of waves;
said motorized mechanism (55d) being configured to hold, in the storage configuration, the reflector (55c) between the upper module (52) and the lower module (53), and in a manner substantially parallel to one of the dissipative surfaces of the lateral module (55) and to displace and hold said reflector (55d), in the operational configuration, in a position allowing the reflection of a beam of waves between the radiofrequency source (55e) and a predefined zone of coverage of the terrestrial globe.

6. Satellite according to Claim 5, whose radiofrequency source (55e) of a telecommunication device is fixed against a dissipative surface (55j) of the lateral module.

7. Satellite according to one of Claims 5 or 6, whose radiofrequency source (55i) of a telecommunication device is fixed against a surface of the lateral module that is adjacent and substantially perpendicular to the two dissipative surfaces (55f, 55j).

8. Satellite according to one of Claims 5 to 7, whose set of at least one mission or service facility comprises several telecommunication devices; said satellite furthermore comprising means of communication between the telecommunication devices, the upper module (52) and/or the lower module (53); said communication means comprising a physical link or a link in free space.

9. Satellite according to one of the preceding claims, comprising a substantially spindly mechanical reinforcement (51b), linking the upper module (52) and the lower module (53), and able to rigidify the satellite.

10. Satellite according to one of the preceding claims, comprising a set of solar generators (61) held in the storage configuration against one of the dissipative surfaces of the lateral module (55).

11. Satellite according to Claim 10, whose set of solar generators is fixed to the lateral module, to the upper module (52) or to the lower module (53).

12. Satellite according to Claim 10, whose set of solar generators (61) is linked electrically to the lower module (53).

13. Satellite according to one of the preceding claims, comprising two lateral modules (55, 56) configured in such a way that, in the storage configuration, the dissipative surfaces of the two lateral modules are substantially mutually parallel.

14. Satellite according to one of the preceding claims, of which at least one lateral module is deployed from the storage configuration to the operational configuration by a rotation of an angle substantially equal to 90 degrees.

15. Satellite according to one of the preceding claims, of which at least one lateral module (55) is deployed from the storage configuration to the operational configuration by a rotation of an angle substantially equal to 180 degrees.
